**Europäisches Patentamt**

**European Patent Office**

**Office européen des brevets**

(19)

(11) Veröffentlichungsnummer: **0 185 185 B1**

# EUROPÄISCHE PATENTSCHRIFT

(12)

(45) Veröffentlichungstag der Patentschrift:
24.01.90

(21) Anmeldenummer: 85114129.1

(22) Anmeldetag: 06.11.85

(51) Int. Cl.⁴: **A01N 25/02, A01N 25/04**

(54) Verfahren zur Verdunstungshemmung und Mittel zu seiner Durchführung.

(30) Priorität: 14.11.84 DE 3441587
02.03.85 DE 3507380

(43) Veröffentlichungstag der Anmeldung:
25.06.86 Patentblatt 86/26

(45) Bekanntmachung des Hinweises auf die Patenterteilung:
24.01.90 Patentblatt 90/4

(84) Benannte Vertragsstaaten:
AT BE CH DE FR IT LI NL SE

(56) Entgegenhaltungen:
DD-A- 214 519
DE-A- 2 556 656
FR-A- 1 347 905
FR-A- 1 563 277
FR-A- 2 026 049
FR-A- 2 053 631
FR-A- 2 171 239
FR-A- 2 501 005
GB-A- 1 272 408
US-A- 2 580 653
US-A- 3 265 568
US-A- 3 791 839

PATENTS ABSTRACTS OF JAPAN, Band 7,
Nr. 97 (C-163) [1242], 23. April 1983; & JP - A - 58 24 502

(73) Patentinhaber: Henkel Kommanditgesellschaft auf
Aktien, Postfach 1100 Henkelstrasse 67,
D-4000 Düsseldorf-Holthausen(DE)

(84) Benannte Vertragsstaaten: BE CH DE FR LI AT

(73) Patentinhaber: HOECHST AKTIENGESELLSCHAFT,
Postfach 80 03 20, D-6230 Frankfurt am Main 80(DE)

(84) Benannte Vertragsstaaten: AT BE CH DE FR IT LI NL SE

(72) Erfinder: Köster, Josef, Benrather Strasse 13,
D-4000 Düsseldorf(DE)
Erfinder: Asbeck, Adolf, Am Langen Weiher 51,
D-4000 Düsseldorf 13(DE)
Erfinder: Tesmann, Holger, Dr., Vennstrasse 61,
D-4000 Düsseldorf(DE)
Erfinder: Grünert, Margarete, Flottheide 9,
D-4044 Kaarst 2(DE)
Erfinder: Schmid, Karl, Dr., Stifterstrasse 10,
D-4020 Mettmann(DE)
Erfinder: Albrecht, Konrad, Dr., Sodener Strasse 64,
D-6233 Kelkheim(DE)
Erfinder: Bittner, Paul, Robert-Schumann-Ring 55a,
D-6239 Kriftel(DE)
Erfinder: Keim, Fritz, Dr., Frankfurter Strasse 41,
D-6238 Hofheim(DE)

(56) Entgegenhaltungen: (Fortsetzung)
Die Akte enthält technische Angaben, die nach dem
Eingang der Anmeldung eingereicht wurden und die
nicht in dieser Patentschrift enthalten sind.

**Beschreibung**

Agrarchemikalien werden heute in weitem Umfang zur Sicherung des Wachstums und der Ernte von Nutzpflanzen angewendet, wobei der großflächige Anbau die Ausbringung insbesondere vom Flugzeug aus erfordert. Um den Kostenaufwand hierbei möglichst gering zu halten, wird versucht, die zum Verdünnen der handelsüblichen Konzentrate benötigten Wassermengen möglichst klein zu halten und mit geringen Aufwandmengen bei hohen Wirkstoffkonzentrationen auszukommen. Man arbeitet heute im Low Volume-Verfahren (LV) mit Aufwandmengen von 5–50 Litern/ha, wobei bekannte handelsübliche Produkte, wie benetzbare Pulver (WP), konzentrierte Wirkstoffsuspensionen (SC) oder lösungsmittelhaltige Konzentrate (EC), die üblicherweise mit Bodengeräten in 300–600 Litern Wasser/ha suspendiert verspritzt werden, verwendet werden.

Je geringer die Spritzbrühemengen sind, die pro Flächeneinheit ausgebracht werden, um so feintropfiger muß appliziert werden, um einen zufriedenstellenden Bedeckungsgrad der Pflanzen zu erreichen. In Verbindung mit der hohen Konzentration der Spritzbrühen resultierte hieraus bisher das Haupthindernis für das Arbeiten im LV-Verfahren, insbesondere unter subtropischen und tropischen Klimabedingungen: Das Wasser verdunstet infolge der großen Oberfläche der feinen Tröpfchen zu rasch, so daß es zu erhöhter Abtrift kommen kann.

Neben Abtriftverlusten können je nach dem verwendeten Pflanzenbehandlungsmittel auch Schäden an benachbarten Kulturen auftreten. Eine gezielte Applikation mit dem Flugzeug ist somit schwierig; Umweltschäden oder Ernteverluste müssen unter Umständen in Kauf genommen werden.

Weiterhin kann es beim Ansetzen der Spritzbrühe mit den sehr verminderten Wassermengen zu starker Schaumentwicklung kommen, da die in den benetzbaren Pulvern oder konzentrierten Dispersionen enthaltenen Dispergier- und Netzmittel dann in entsprechend höheren Konzentrationen vorliegen. Das Produkt schäumt aus den Spritztanks, wenn man nicht die Füllmenge stark reduziert.

Die in Frage stehenden Spritzbrühen von Agrarchemikalien werden aus handelsüblichen wirkstoffhaltigen Konzentraten durch Dispergieren oder Emulgieren in der gewünschten Wassermenge hergestellt. Bei den Konzentraten handelt es sich entweder um selbstemulgierende Wirkstofflösungen in einem organischen Lösungsmittel (EC), oder um wirkstoffhaltige benetzbare Pulverprodukte (WP), oder um in suspendierter Form vorliegende Wirkstoffkonzentrate (SC).

Als Agrarchemikalien können Insektizide, Fungizide, Viruzide, Herbizide, Akarizide, Dessikantien, Wachstumsregulatoren, Reifebeschleuniger, Repellents, Pheromone, Blattdünger, Defoliantien etc. eingesetzt werden; darüber hinaus enthalten die Konzentrate gegebenenfalls Dispersionsmittel, Emulgatoren, Netzmittel, Entschäumer, Haftmittel, Trägerstoffe und Pigmente zur Erzielung eines Markierungseffektes.

Die Erfindung hat Maßnahmen zur Verminderung der Wasserverdunstung beim Ausbringen von Spritzbrühen von Agrarchemikalien im LV-Verfahren zum Ziel. Ein entsprechender Vorschlag ist bereits in DE 2205590 beschrieben, doch besitzen die dort beanspruchten verdunstungshemmenden Zusatzmittel auf Mineralölbasis unter subtropischen und tropischen Klimabedingungen keine ausreichende Wirkung. Weiterhin ist aus US 3791839 ein Vorschlag bekannt geworden, die Wasserabgabe von lebenden Pflanzen, besonders während des Wachstums in trockenen Klimaten durch Aufbringen einer wäßrigen Emulsion auf die Pflanzenoberfläche zu verringern, wobei die Emulsion neben Paraffinwachs und Emulgator gegebenenfalls vaselinartige Kohlenwasserstoffe (Petrolatwachs) enthält. Diese Emulsionen dienen jedoch nicht dazu, die Verdunstung von Pflanzenschutzmittel-Spritzbrühen während des Versprühens im LV-Verfahren zu vermindern.

Gegenstand der Erfindung ist ein verdunstungshemmendes Zusatzmittel (VH) für Spritzbrühen von Agrarchemikalien, die im LV-Verfahren ausgebracht werden, in Form einer Wachs enthaltenden wäßrigen Dispersion oder selbstemulgierenden Lösung in organischen Lösungsmitteln mit folgender Zusammensetzung:

15 bis 50 Gew.-% eines Wachses oder einer Wachsmischung,
4 bis 2o Gew.-% nichtionische und/oder anionische Emulgatoren,
19,5 bis 81 Gew.-% Wasser und/oder organische Lösungsmittel aus der Gruppe Kohlenwasserstoffe, Ester und Ketone, mit Siedepunkten zwischen 70 und 280 °C,
0 bis 5,5 Gew.-% Hilfsstoffe,
0 bis 5,0 Gew.-% Amine oder Alkali.

Das Mittel hat dabei vorzugsweise eine der folgenden Zusammensetzungen X oder Y:
Zusammensetzung X:

15 bis 40 Gew.-% Paraffinwachse oder Paraffinwachse enthaltendes Wachsgemisch mit einem Tropfpunkt zwischen 35 und 80°C,
4 bis 20 Gew.-% nichtionische und/oder anionische Emulgatoren,
35 bis 81 Gew.-% Wasser und/oder organische Lösungsmittel aus der Gruppe Kohlenwasserstoffe, Ester und Ketone, mit Siedepunkten zwischen 7o und 280°C,
0 bis 5,5 Gew.-% weitere Hilfsstoffe.

Von Mitteln der Zusammensetzung X werden wiederum solche bevorzugt verwendet, die als wäßrige Dispersionen mit folgender Zusammensetzung vorliegen:

15 bis 40 Gew.-% Paraffinwachse oder eines Gemisches von Paraffinwachsen unterschiedlicher Tropfpunkte im Bereich von 35 - 70°C, oder eines Gemisches solcher Paraffinwachse mit mikrokristallinen Wachsen mit Tropfpunkten zwischen 50 und 90°C, wobei der Anteil der Paraffinwachse an der Wachsmischung wenigstens 50 Gew.-% beträgt,
4 bis 20, vorzugsweise 4 bis 14 Gew.-% nichtionische Emulgatoren,
0 bis 10, vorzugsweise 1 bis 7 Gew.-% anionische Emulgatoren, wobei der Anteil der nichtionischen Emulgatoren wenigstens 5o Gew.-% der Emulgatoren ausmacht,
35 bis 81 Gew.-% Wasser,
0 bis 10 Gew.-% Xylol oder Cyclohexanon oder Benzinfraktionen mit Siedepunkten zwischen 145 und 210°C oder Ester mit Siedepunkten zwischen 70 und 280°C,
0 bis 5 Gew.-% Hydrotrope,
0 bis 0,5 Gew.-% anorganische Salze.

Die Zusammensetzung Y weist folgende Komponenten auf:

15 bis 50 Gew.-% einer Wachsmischung, enthaltend eine Wachskomponente mit einer Säurezahl von 10 bis 95 mg KOH/g Wachs,
4 bis 2o Gew.-% nichtionische und/oder anionische Emulgatoren,
19,5 bis 81 Gew.-% Wasser und/oder organische Lösungsmittel aus der Gruppe Kohlenwasserstoffe, Ester uind Ketone, mit Siedepunkten zwischen 70 und 280°C,
0 bis 5,5 Gew.-% Hilfsstoffe,
0 bis 5,0 Gew.-% Amine oder Alkali.

Die Wachsmischung weist dabei im allgemeinen wenigstens 5 Gew.-%, bezogen auf Wachs allein, an der Wachskomponente mit einer Säurezahl von 10 bis 95 auf. Vorzugsweise hat die Wachsmischung eine der folgenden Zusammensetzungen:

Mischung (A)

60 bis 95 Gew.-% Paraffinwachs und/oder mikrokristallines Paraffinwachs mit einem Erstarrungspunkt von 40 bis 70°C,
5 bis 40 Gew.-% oxidiertes Polyethylenwachs mit einem Tropfpunkt von 95 bis 140°C und einer Säurezahl von 10 bis 95 mgKOH/g Wachs.

Mischung (B)

60 bis 95 Gew.-% Paraffinwachs und/oder mikrokristallines Paraffinwachs mit einem Erstarrungspunkt von 40 bis 70°C,
5 bis 40 Gew.-% Esterbindungen enthaltendes Wachs mit einem Tropfpunkt von 75 bis 100°C und einer Säurezahl von 10 bis 95 mg KOH/g Wachs.

Mischung (C)

20 bis 50 Gew.-% Paraffinwachs mit einem Erstarrungspunkt zwischen 30 und 50°C,
5o bis 80 Gew.-% oxidiertes Paraffinwachs mit einem Erstarrungspunkt von 60 bis 90°C und einer Säurezahl von 10 bis 95 mg KOH/g Wachs.

Gegenstand der Erfindung ist ferner ein Verfahren zur Verminderung der Wasserverdunstung von Spritzbrühen von Agrarchemikalien bei der Ausbringung nach dem LV-Verfahren, dadurch gekennzeichnet, daß man den auf Anwendungskonzentration eingestellten Spritzbrühen 1 bis 15 Gew.-%, vorzugsweise 5 bis 10 Gew.-%, eines verdunstungshemmenden Zusatzmittels gemäß vorstehender Definition zusetzt. In Mitteln der Zusammensetzung X sollten dabei die Tropfpunkte des Paraffinwachses oder des Wachsgemisches, vorzugsweise 10 bis 40°C, insbesondere wenigstens 15°C über der jeweiligen Lufttemperatur bei der Ausbringung liegen.
Die erfindungsgemäßen Zusatzmittel können als Lösungen der Wachs- und Emulgatorbestandteile in den organischen Lösungsmitteln vorliegen. Derartige Lösungen sind temperatur- und lagerstabil und bilden beim Einrühren in Wasser bzw. in die auf Anwendungskonzentration eingestellten Spritzbrühen Dispersionen, die unter üblichen Einsatzbedingungen eine gute thermische Stabilität aufweisen.
Vorzugsweise werden die Zusatzmittel jedoch als konzentrierte wäßrige Dispersionen eingesetzt, da sich diese wegen des fehlenden oder geringen Lösungsmittelanteils problemloser in die Spritzbrühen einarbeiten lassen. Die Dispersionen werden beispielsweise dadurch hergestellt, daß man die zu dispergierenden Bestandteile (Wachsmischung, Emulgatoren, gegebenenfalls organische Lösungsmittel) zusammenschmilzt und danach die gewünschte Wassermenge und gegebenenfalls weitere Hilfsstoffe zugibt. Bei höherschmelzenden Wachsgemischen geht man zweckmäßigerweise auch so vor, daß man die mit den Emulgatoren und gegebenenfalls organischen Lösungsmitteln zusammengeschmolzene Wachsmischung in das auf 60 bis 100°C, vorzugsweise 80 bis 100°C erhitzte Wasser,das gegebenenfalls weitere Bestandteile enthält, einrührt und danach rasch abkühlt. Die Dispersion zeichnet sich durch eine hervorragende Temperatur- und Lagerstabilität aus, die ihre Einsatzfähigkeit auch unter subtropischen und tropischen Klimabedingungen ermöglicht.

Insbesondere werden die beanspruchten Zusatzmittel in Form wäßriger Dispersionen verwendet, die folgende Zusammensetzung aufweisen:

15 bis 40 Gew.-% Wachsmischung (A), (B) oder (C),
4 bis 20, vorzugsweise 4 bis 14 Gew.-% nichtionische Emulgatoren,
0 bis 10 vorzugsweise 1 bis 7 Gew.-% anionische Emulgatoren, wobei der Anteil der nichtionischen Emulgatoren wenigstens 50 Gewichtsprozent der Emulgatoren ausmacht,
29,5 bis 81 Gew.-% Wasser,
0 bis 10 Gew.-% Xylol oder Cyclohexanon oder Benzinfraktionen mit Siedepunkten zwischen 145 und 210°C oder Ester mit Siedepunkten zwischen 70 und 280°C,
0 bis 5 Gew.-% Hydrotrope,
0 bis 0,5 Gew.-% anorganische Salze,
0 bis 5,0 Gew.-% Amine oder Alkali.

Die wäßrigen Dispersionen eignen sich vorzugsweise für den Einsatz in Spritzbrühen auf der Basis von lösungsmittelhaltigen Konzentraten (EC) und benetzbaren Pulvern (WP). Die Herstellung der gebrauchsfertigen Spritzbrühen erfolgt durch einfaches Einrühren der wäßrigen Dispersion in die auf Anwendungskonzentration eingestellten Spritzbrühen.

Das Ausbringen erfolgt bei der Behandlung großer Flächen in der Regel vom Flugzeug aus in Form eines sehr feinteiligen Sprühnebels, doch sind für kleinere Flächen auch tragbare oder fahrbare Geräte im Einsatz.

Die beanspruchten Zusatzmittel bewirken infolge ihres Gehaltes an auf die jeweiligen Anwendungsbedingungen spezifisch abgestimmten Wachsmischungen eine starke Hemmung der Wasserverdunstung aus den Sprühnebeltröpfchen während des Ausbringens. Das Tröpfchengewicht bleibt hierdurch weitgehend erhalten, was zu erhöhter Sinkgeschwindigkeit und geringerer Abtrift durch Windeinflüsse führt. Dies führt zu einer besseren Wirkung der Pflanzenbehandlungsmittel und somit zu höheren Ernteerträgen. Andererseits können auch die Wirkstoffmengen reduziert werden. Durch die Erhaltung der Flüssigkeitsmenge in den Spritzbrühetröpfchen wird weiterhin eine unerwünschte Aufkonzentrierung der Wirkstoffe vermieden, so daß hierdurch eine verzögerte Wirkstofffreisetzung (slow release) erfolgt, was sich auf die Phytotoxizität der verwendeten Mittel positiv auswirken kann.

Der Wachsgehalt der Zusatzmittel wirkt außerdem schaumhemmend, so daß ein übermäßiges Schäumen beim Ansetzen der Spritzbrühen und Abfüllen in Tanks und dergleichen vermieden wird.

Die in den Zusatzmitteln eingesetzten Paraffinwachse bestehen im wesentlichen aus linearen Kohlenwasserstoffen der Kettenlängen $C_{20}$ - $C_{40}$, die ein durchschnittliches Molgewicht von 280 - 560 aufweisen. Derartige Paraffinwachse weisen Tropfpunkte von 35 - 80°C oder Erstarrungspunkte von 30 - 70°C auf. Um den verdunstungshemmenden Effekt auch bei höheren Lufttemperaturen mit Sicherheit zu erreichen, ist es zweckmäßig, Paraffinwachse verschiedener Tropfpunkte bzw. Erstarrungspunkte oder Paraffinwachse mit mikrokristallinen Wachsen zu kombinieren. In jedem Falle muß jedoch der Anteil der Paraffinwachse an der gesamten Wachsmischung gemäß Zusammensetzung X wenigstens 50 Gew.-% betragen.

Mikrokristalline Wachse bestehen in der Hauptsache aus Naphthenen mit langen Seitenketten, zusammen mit Isoparaffinen und kleinen Mengen weiterer aliphatischer und aromatische Kohlenwasserstoffe. Die einzelnen Bestandteile enthalten 30 - 60 C-Atome im Molekül; die Wachse weisen durchschnittliche Molekulargewichte von 580 bis 700, Tropfpunkte von 50 bis 90°C oder Erstarrungspunkte von 40 - 70°C, auf.

In den Wachsmischungen (A), (B) oder (C) der Zusammensetzung Y werden vorzugsweise folgende Produkte eingesetzt:

(a) Paraffinwachse bzw. mikrokristalline Paraffinwachse der angegebenen Erstarrungsbereiche, wie sie aus natürlichen Quellen oder auf synthetischem Wege gewonnen werden. Beispiele hierfür sind Ozokerit, Paraffinwachse aus der Erdöldestillation, Mikroparaffine aus Rohölrückständen oder synthetische Paraffine aus der Fischer-Tropsch-Synthese.

(b) Oxidierte Polyethylenwachse mit Tropfpunkten von 95 bis 140°C, wie sie durch partielle Oxidation von Polyethylenen erhalten werden. Die Säurezahl liegt vorzugsweise bei 10 bis 70 mg KOH/g Wachs.

(c) Oxidierte Paraffinwachse mit Erstarrungspunkten von 60 bis 9o°C und einer Säurezahl von 10 bis 95 mg KOH/g Wachs; sie werden durch partielle Oxidation von Paraffinen erhalten.

(d) Esterbindungen enthaltende Wachse; sie stammen vorzugsweise aus natürlichen Quellen. Beispiele hierfür sind Montanwachse in roher bzw. raffinierter Form, Pflanzenwachse, wie Carnauba- oder Candelillawachs, oder Insektenwachse, wie Schellackwachs. Die Esterwachse weisen Tropfpunkte von 75 - 100°C auf und liegen gegebenenfalls in anverseifter Form mit einer Säurezahl von 10 bis 95 mg KOH/g Wachs vor.

Als Emulgatoren werden vorzugsweise nichtionische Tenside oder Tensidmischungen eingesetzt. Hierzu zählen beispielsweise die Sorbitanester der höheren Fettsäuren und langkettige Alkylglycoside sowie die Alkylenoxidaddukte an höhere lineare ein- und mehrwertige Alkohole, Alkylphenole, langkettige Carbonsäuren, Carbonsäureamide und Hydroxyfettsäuren mit 10 - 24 C-Atomen sowie an Fettsäureglycerin- oder Sorbitanester und langkettige Alkylglycoside. Vorzugsweise werden die Addukte von 2 - 50 Mol Ethylenoxid an langkettige, insbesondere primäre Alkohole und an Fettsäuren mit 12 - 18 C-Atomen eingesetzt. Zur Verbesserung der Temperaturstabilität der wäßrigen Zusatzmittel-Dispersionen empfiehlt es sich, zwei oder mehrere Alkylenoxidaddukte verschiedener Alkoxylierungsgrade miteinander zu kombinieren. Als besonders wirksam hat sich ein Gemisch aus Ethylenoxidaddukten an $C_{12}$-$C_{18}$-Fettalkohole oder Alkylphenole erwiesen, bestehend aus

10 - 40 Gew.-% Addukten mit 1 - 4 Mol Ethylenoxid,
25 - 70 Gew.-% Addukten mit 4 - 10 Mol Ethylenoxid,
5 - 35 Gew.-% Addukten mit 10 - 50 Mol Ethylenoxid.

Eine weitere Stabilisierung der Dispersionen kann erreicht werden, wenn man einen Teil der nichtionischen Emulgatoren durch anionische Emulgatoren ersetzt. Als solche kommen die Alkali-, Ammonium-, Amin- und Erdalkalisalze langkettiger Alkylsulfate, Sulfonate und Phosphorsäurepartialester infrage. Insbesondere eignen sich die Salze von Schwefelsäurehalbestern oder Phosphorsäurepartialestern der linearen Alkohole oder Alkylphenole mit jeweils 12 - 18 C-Atomen oder der Polyglykolmonoalkylether mit 12 - 18 C-Atomen in der Alkylgruppe sowie die 12 - 20 C-Atome enthaltenden Olefinsulfonate, Estersulfonate und Alkansulfonate, die Alkylbenzolsulfonate mit 6 - 16 C-Atomen in den Alkylgruppen, die Sulfonate der Polyglykolmonoalkylether und die Salze der Polyglykolmonoalkylethercarbonsäuren mit jeweils 12 - 18 C-Atomen in den Alkylgruppen. Vorzugsweise werden von diesen Tensiden Alkylbenzolsulfonate und Alkansulfonate verwendet.

Die Emulgatoren werden in einer Gesamtmenge von 4 bis 20 Gew.-%, vorzugsweise 4 - 14 Gew.-%, bezogen auf das gesamte Zusatzmittel, angewendet. Sofern anionische Emulgatoren anwesend sind, beträgt ihr Anteil vorzugsweise wenigstens 0,5 Gew.-%, insbesondere wenigstens 1,0 Gew.-% des gesamten Mittels. Der Anteil der nichtionischen Emulgatoren soll vorzugsweise wenigstens 50 Gew.-%, bezogen auf die Gesamtmenge der Emulgatoren, betragen.

Die in den Zusatzmittelformulierungen gegebenenfalls enthaltenen organischen Lösungsmittel sind flüssige Kohlenwasserstoffe, Ester oder Ketone mit Siedepunkten zwischen 70 bis 280°C, beispielsweise leichte Mineralöle, Toluol, flüssige Fettsäuremethylester und dergleichen. Vorzugsweise werden Xylol, Cyclohexanon oder Benzinfraktionen mit Siedebereichen zwischen 145 und 210°C verwendet.

Als weitere Hilfsstoffe, die bei Bedarf in einer Gesamtmenge bis zu 5,5 Gew.-% insbesondere den in Dispersionsform vorliegenden Mitteln zugesetzt werden können, sind Farbstoffe, Viskositätsregulatoren, Schaumregulatoren, Konservierungsmittel, anorganische Salze, Hydrotrope, und andere Dispergierhilfsmittel zu nennen. Von Bedeutung für die Dispersionen sind dabei in erster Linie Hydrotrope und Salze, die die Struktur des wäßrigen Anteils der Dispersion beeinflussen und es dadurch gestatten, die Viskosität und den Dispersionsgrad zu beeinflussen. Als Hydrotrope werden vorzugsweise nichttensidische Salze von aromatischen Sulfonsäuren, wie Natriumcumolsulfonat, und von Schwefelsäurehalbestern der Alkohole mit 6 bis 10 C-Atomen verwendet, wobei Einsatzmengen bis zu 5 Gew.-% genügen. Als anorganische Salze werden insbesondere die Natrium- oder Kaliumsalze der Mineralsäuren in Mengen bis zu 0,5 Gew.-% zugesetzt. Vorzugsweise dienen zusätzlich geringe Mengen von bis zu 5 Gew.-% an Aminen oder Alkali zur pH-Einstellung der Dispersion bzw. zur Neutralisation der saure Gruppen enthaltenden oxidierten Polyethylen- oder Paraffinwachse bzw. Esterwachse. Besonders geeignet sind Alkanolamine, wie Diethanolamin, Morpholin, Natrium- oder Kaliumhydroxid.

Die Art der verwendeten Agrarchemikalien in den Spritzbrühen ist für den Einsatz der verdunstungshemmenden Zusatzmittel (VH) gemäß der Erfindung nicht kritisch. Beispielsweise können die Zusatzmittel zur Ausbringung der folgenden Pflanzenschutzmittel-Wirkstoffe verwendet werden, wobei diese Aufzählung keine Einschränkung der Erfindung bedeuten soll:

"Pyrethroide wie Deltamethrin, Cypermethrin, Fenpropathrin, Cyfluthrin, Fenvalerate, Permethrin; (Thio) Phosphorsäureester wie Triazophos, Parathionmethyl, Dimethoat, Heptenophos, Pyrazophos, Profenofos, Sulprofos, Dialifos, Chlorpyrifos, Anilofos; Carbamate wie BPMC, Carbaryl, Propoxur, Methomyl, Carbofuran, Phenmedipham, Desmedipham, Pririmicarb; Chlorkohlenwasserstoffe wie Camphechlor, Dicofol; Chitinsynthesehemmer wie Diflubenzuron, Trifluron, Teflubenzuron (CME 134) oder Chlorfluazuron (IKI 7899); die Wirkstoffe Endosulfan, Amitraz, Clofentezine, Phosethyl AL, Prochloraz.

Herbizide vom Typ der Phenoxy- oder Heteroaryloxy- phenoxypropionsäurederivate wie Diclofop-methyl, Fenoxaprop-ethyl, Fluazifop-butyl, Haloxyfopethoxyethyl (Dowco 453), Quinofopethyl; Harnstoffderivate wie Diuron, Isoproturon, Linuron, Monolinuron, Chlortoluron, Sulfonylharnstoffe wie Chlorsulfuron, Sulfometuron; Triazine wie Ametryn, Atrazine, Simazine; halogenierte Phenoxyessigsäure- oder -propionsäure-derivate wie MCPA, Dichlorprop, 2,4,5,-T, Mecoprop, 2,4-D, deren Ester oder Salze; Anilinderivate wie Butachlor, Propanil, Benzoylprop-ethyl, Alachlor, Metolachlor; Nitrophenoldrivate wie Binapacryl oder Dinosebacetat; Nitroanilinderivate wie Trifluralin oder Pendimethalin; Benzothiadiazine wie Bentazone; die Wirkstoffe Ioxynil, Bromoxynil, Metamitron, Glufosinate oder dessen Salze, Bialaphos oder dessen Salze, Glyphosate oder dessen Salze, Triazolderivate wie Triadimefon; die fungiziden Wirkstoffe Metal axyl, Iprodione, Fenarimol, Triforine, Propiconazol, Tridemorph, Pyracarbolid; schwermetallhaltige Wirkstoffe wie Maneb, Sineb, Triphenylzinnverbindungen, wie Fentin-acetat oder Fentinhydroxid, Azocyclotin, Cyhexatin, Kupferoxichlorid; Pflanzenwachstumsregulatoren wie Mepiquatchlorid oder Chlormequatchlorid oder analoge Salze, Ancymidol, Tetcyclacis oder Mefluidid. Zur weiteren Information über diese Wirkstoffe s. CH. R. Worthing, S. B. Walker, The Pesticide Manual, 7th ed., British Crop Protection Council, London, 1985.

Beispiele

I.Rezepturbeispiele für Verdunstungshemmer (VH)

Alle Mengenangaben in Gewichtsprozent. Folgende Abkürzungen werden verwendet:

EO = Ethylenoxid
Ep = Erstarrungspunkt (bestimmt nach der DGF-Methode III 4a)
PO = Propylenoxid
SB = Siedebereich
SZ = Säurezahl (bestimmt nach der DGF-Methode IV 2)
Tp = Tropfpunkt (bestimmt nach der DGF-Methode III 3)

Beispiele der Zusammensetzung X:

Beispiel 1

30,0 % Paraffin, Tp 50 - 52°C
2,0 % Fettalkohol $C_{12}$-$C_{18}$ + 2 EO
6,0 % Fettalkohol $C_{16}$-$C_{18}$ + 6 EO
2,0 % Fettalkohol $C_{16}$-$C_{18}$ + 12 EO
60,0 % Wasser

Beispiel 2

26,0 % Paraffin, Tp 50 - 52°C
4,0 % Testbenzin, SB 180 - 210°C
2,0 % Fettalkohol $C_{12}$-$C_{18}$ + 2 EO
8,0 % Talgfettalkohol + 6 EO
2,0 % Talgfettalkohol + 12 EO
58,0 % Wasser

Beispiel 3

23,0 % Paraffin, Tp 50 - 52°C
2,0 % Paraffin, Tp 38 - 40°C
10,0 % Testbenzin, SB 145 - 200°C
6,0 % Talgfettalkohol + 6 EO
4,0 % Fettalkohol $C_{12}$-$C_{18}$ + 4 EO
1,0 % Talgfettalkohol + 25 EO
54,0 % Wasser

Beispiel 4

40 % Paraffin, Tp 40 - 42°C
8 % Oleyl-/Cetylalkohol + 5 EO
52 % Wasser

Beispiel 5

30,0 % Paraffin, Tp 38 - 40°C
55,0 % Xylol

10,5 % Dodecylbenzolsulfonat, Ca-Salz (70 %ig)
4,5 % Fettalkoholgemisch $C_8$-$C_{10}$ $C_{16}$-$C_{18}$ + 2 PO + 11 EO

Beispiel 6

30,0 % Paraffin, Tp 40 - 42°C
55,0 % Xylol
7,5 % Petroleumsulfonat, Na-Salz
7,5 % Ölsäure + 15 EO

Beispiel 7

20,0 % Paraffin, Tp 38 - 40°C
65,0 % Testbenzin, SB 145 - 200°C
7,5 % Dodecylbenzolsulfonat Ca-Salz (70 %ig)
7,5 % Ölsäure + 8 EO

Beispiel 8

15 % Mikrowachs, Tp 68 - 72°C
15 % Paraffin, Tp 50 - 52°C
2 % Fettalkohol $C_{12}$-$C_{18}$ + 2 EO
6 % Fettalkohol $C_{12}$-$C_{18}$ + 6 EO
2 % Fettalkohol $C_{12}$-$C_{18}$ + 12 EO
6o % Wasser

Beispiel 9

15 % Paraffin, Tp 57 - 60°C
15 % Paraffin, Tp 50 - 52°C
2 % Fettalkohol $C_{12}$-$C_{18}$ + 2 EO
6 % Fettalkohol $C_{12}$-$C_{18}$ + 6 EO
2 % Fettalkohol $C_{12}$-$C_{18}$ + 12 EO
6o % Wasser

Beispiel 10

3o % Paraffin, Tp 50 - 52°C
3 % Fettalkohol $C_{12}$-$C_{14}$ + 2 EO
5 % Talgalkohol + 6 EO
3 % Talgalkohol + 12 EO
3 % Natriumfettalkoholetherphosphat ($C_{12}$-$C_{18}$ + 10 EO-phosphat, 30 %ig)
56 % Wasser

Beispiel 11

25,0 % Paraffin, Tp 57 - 60°C
3,0 % technischer Oleylalkohol + 2 EO
5,0 % Talgalkohol + 6 EO
2,0 % Talgalkohol + 12 EO
0,1 % NaCl
64,9 % Wasser

Beispiel 12

30 % Paraffin, Tp 50 - 52°C
3 % Fettalkohol $C_{12}$-$C_{18}$ + 2 EO
5 % Talgalkohol + 6 EO
3 % Talgalkohol + 12 EO
1 % Natriumfettalkoholsulfat ($C_8$-$C_{10}$-Sulfat, 30 %ig)
2 % Natriumcumolsulfonat, 50 %ig
56 % Wasser

Beispiele der Zusammensetzung Y:

7

Beispiel 13 (Typ: Wachsmischung (A))

20,0 % Paraffinwachs, Ep. 50 - 54°C
10,0 % oxidiertes Polyethylenwachs, Tp.100 - 105°C SZ 23 - 28
o,5 % Diethanolamin
2,0 % Kokosfettalkohol-$C_{12}$-$C_{18}$ + 2 EO
6,0 % Talgfettalkohol + 6 EO
2,0 % Talgfettalkohol + 12 EO
59,5 % deionisiertes Wasser

Beispiel 14 (Typ: Wachsmischung (A))

27,0 % Paraffinwachs, Ep. 50 - 54°C
3,0 % oxidiertes Polyethylenwachs,Tp. 108 - 111°C, SZ 20 bis 30
0,1 % Diethanolamin
2,0 % Kokosfettalkohol-$C_{12}$-$C_{18}$ + 2 EO
6,0 % Talgfettalkohol + 6 EO
2,0 % Talgfettalkohol + 12 EO
59,9 % deionisiertes Wasser

Beispiel 15 (Typ: Wachsmischung (A))

25,0 % Paraffinwachs, Ep. 50 - 54°C
2,5 % oxidiertes Polyethylenwachs, Tp. 100 - 105°C, SZ 23 - 28
2,5 % Oleylalkohol (Jodzahl 50/55) + 2 EO
4,2 % Talgfettalkohol + 6 EO
2,5 % Talgfettalkohol + 12 EO
0,1 % Diethanolamin
2,0 % Natriumcumolsulfonat (4o %ig)
2,7 % Octanol-/Decanolsulfat, Natriumsalz
58,5 % deionisiertes Wasser

Beispiel 16 (Typ: Wachsmischung B)

27,0 % Paraffinwachs, Ep. 50 - 53°C
3,0 % Esterwachs (Montanwachs) Tp. 82 - 88°C, SZ 25 - 35
o,1 % Diethanolamin
2,0 % Kokosfettalkohol $C_{12}$-$C_{18}$ + 2 EO
6,0 % Talgfettalkohol + 6 EO
2,0 % Talgfettalkohol + 12 EO
59,9 % deionisiertes Wasser

Beispiel 17 (Typ: Wachsmischung C)

14,0 % Paraffinwachs, Ep. 30 - 35°C
16,0 % oxidiertes Paraffinwachs, Ep. 65 - 7o°C, SZ 30 - 35
3,5 % Diethanolamin
2,0 % Kokosfettalkohol $C_{12}$-$C_{18}$ + 2 EO
6,0 % Talgfettalkohol + 6 EO
2,0 % Talgfettalkohol + 12 EO
56,5 % deionisiertes Wasser

Beispiel 18 (Typ: Wachsmischung A)

25,0 % Paraffinwachs, Ep. 50-52°C
2,5 % oxidiertes Polyethylenwachs, Tp. 108-111°C,SZ 20-30
2,5 % Oleylalkohol + 2 EO
4,2 % Talgalkohol + 6 EO
2,5 % Talgalkohol + 12 EO
0,1 % Diethanolamin
2,0 % $C_{16}$/$C_{18}$-Alkansulfonat-Na-Salz, 60 %ig
1,5 % Natriumcumolsulfonat, 40 %ig
0,2 % Konservierungsmittel
59,7 % Wasser

Beispiel 19 (Typ Wachsmischung A)

27,0 % Paraffinwachs, Ep. 50-54°C
3,0 % oxidiertes Polyethylenwachs, Tp. 108-111°C, SZ 20-30
10,0 % Dodecylbenzolsulfonat-Ca-Salz, 70 %ig in Xylol
5,0 % Nichtionisches Tensid aus Fettalkoholgemisch $C_8$-$C_{10}$/$C_{16}$-$C_{18}$ + 2 PO + 11 EO
55,0 % Xylol

II. Verfahren zur Herstellung der Verdunstungshemmer

a) Herstellung des VH, Beispiel 6

In einem Rührkessel von 460 l Inhalt wurden 137,5 kg Xylol vorgelegt und unter Rühren nacheinander 75 kg Paraffinwachs (Tp 40- 42°C, in Schuppenform), 18,75 kg Na-Petrolsulfonat und 18,75 kg Ölsäure + 15 EO zugesetzt. Die Mischung wurde bei Raumtemperatur 30 Minuten gerührt, wobei sich eine homogene Lösung bildete.

b) Herstellung des VH, Beispiel 1

Aus 54 kg Paraffin (Tp 50 - 52°C) 3,6 kg Fettalkohol 12/18 + 2 EO, 10,8 kg Fettalkohol 16/18 + 6 EO und 3,6 kg Fettalkohol 16/18 + 12 EO wurde unter Erwärmen auf 60°C eine Schmelze hergestellt. Unter Rühren wurden in diese Schmelze innerhalb von 15 Minuten 108 kg Wasser von 60°C eingetragen. Nach dem Ende der Zugabe wurde die Dispersion innerhalb von 3 Stunden auf unter 30°C abgekühlt.

III.Messung an verdunstenden Wassertröpfchen

Wassertröpfchen von 50 - 100 µm Durchmesser wurden an Perlonfasern von 12 µm Durchmesser angesprüht und unter dem Mikroskop mit 5oo-facher Vergrößerung in kurzen Abständen fotografiert, um ihren Verdunstungsverlauf bei Labortemperatur (22°C) festzuhalten. Anhand der Mikroskopaufnahmen wurden Durchmesser und Volumen der Tröpfchen nach verschiedenen Verdunstungszeiten errechnet.

Es wurden Wasser und eine 2,5 %ige wäßrige Verdünnung des Zusatzmittels des Beispiels 1 miteinander verglichen.

Ein Wassertropfen von ca. 70 µm Durchmesser ist unter dem Mikroskop bei Zimmertemperatur nach 13 Sekunden vollständig verdunstet; nach der gleichen Zeit hat ein gleich großes Tröpfchen mit 2,5 % erfindungsgemäßem Zusatzmittel erst etwa ein Viertel seines ursprünglichen Volumens durch Verdunstung verloren.

In Tabelle 1 sind die durch lineare Interpolation zwischen den Mikroskopauswertungspunkten ermittelten Zeiten aufgelistet, nach denen der Tropfen auf das halbe Volumen bzw. auf den halben Durchmesser geschrumpft war.

Tabelle 1

| | Anfangsdurchmesser | Verdunstungszeit bis zum | |
| --- | --- | --- | --- |
| | | halben Volumen | halben Durchmesser |
| Wasser ohne Zusatzmittel | 67 µm | 5 Sekunden | 10 Sekunden |
| Wasser mit 2,5% Zusatzmittel | 64 µm | 18 Sekunden | 70 Sekunden |

IV. Prüfung der Verdunstungsmessung direkt am Tröpfchen der Spritzbrühen

An der Spitze einer waagerecht unter einem Mikroskop angebrachten 1 µl-Hamilton-Spritze wurden durch vorsichtiges Einschieben des Kolbens halbkugelförmige Tröpfchen mit einem Volumen von ca. 0,01 µl erzeugt. Um den Verdunstungsverlauf zu messen, wurde die Größe der Tröpfchen nach bestimmten Zeitabständen mit Hilfe einer im Okular eingebauten Graduierung gemessen und daraus das Tröpfchenvolumen errechnet. Die Versuche wurden bei einer Temperatur von 23°C und einer relativen Luftfeuchtigkeit von 55 % durchgeführt.

Die drei getesteten Spritzflüssigkeiten enthielten 10 Gew.-% (R)Hostaquick, ein Insektizid der Firma Hoechst AG (enthält 6-Chlorbicyclo(3,2,0)hepta-2,6-dien-6-yldimethylphosphat, Emulgatoren und Xylol), Zusatzmittel nach Beispiel 15 und Standard-Wasser von 342 ppm Härte. Die Meßergebnisse sind in der nachfolgenden Tabelle 2 zusammengefaßt. Die dort angegebenen Zahlen entsprechen Mittelwerten aus fünf Versuchen.

Tabelle 2

| Zusatzmittel-anteil | Tröpfchenvolumen in 1/1000 µl, nach sec. | | | | | | | |
|---|---|---|---|---|---|---|---|---|
| | 0 | 20 | 40 | 60 | 80 | 100 | 120 | 140 |
| 0 % | 11 | 2,8 | 0,0 | – | – | – | – | – |
| 2,5 % | 11 | 5,3 | 3,2 | 2,1 | 1,3 | 0,5 | 0,0 | – |
| 5 % | 11 | 7,0 | 6,1 | 5,4 | 4,6 | 3,9 | 3,1 | 2,4 |
| Wasser | 11 | 2,0 | 0,0 | – | – | – | – | – |

V. Vergleichende Prüfung von VH an wirkstofffreien Testbrühen

Zur Prüfung der Verdunstungshemmung und des Schäumverhaltens wurden die folgenden Testbrühen verwendet:

EC-Typ A: 10 g wirkstofffreies Konzentrat aus 8 g Xylol und 2 g Emulgatorgemisch (1,2 g Nonylphenol + 15 EO, o,8 g Dodecylbenzolsulfonat-Ca-Salz, 70 %ig) wurden in
80 g Wasser emulgiert, dann
10 g Zusatzmittel der Beispiele 1, 2, 3, 4, 8, 9, 13, 14, 15, 16 und 17 zugesetzt.
(Blindwert: 10 g Konzentrat ohne Zusatzmittel in 9o g Wasser)
EC-Typ B: 1o g wirkstofffreies Konzentrat aus 8 g Phthalsäurediisooctylester und 2 g Emulgatorgemisch (1,6 g Ricinusöl + 12 EO, o,4 g Dodecylbenzolsulfonat Ca-Salz, 70 %ig) wurden in
80 g Wasser emulgiert, dann
10 g Zusatzmittel der Beispiel 5, 6 und 7 zugegeben.
(Blindwert: 10 g Konzentrat ohne Zusatzmittel in 90 g Wasser)
WP-Typ: 5 g wirkstofffreies benetzbares Pulver aus 4,4 g Kaolin (Bolus alba 1a, gemahlen) und 0,6 g Emulgatorgemisch (C12-C14-Fettalkoholsulfat-Na-Salz,anorganische Salze) wurden in
85 g Wasser suspendiert, dann
10 g Zusatzmittel der Beispiele 1, 2, 3, 5, 6 und 7 zugesetzt.
(Blindwert: 5 g Pulver ohne Zusatzmittel in 95 g Wasser)

Zur Prüfung der Verdunstungshemmung wurden je 50 g der Testbrühen in eine Glasschale mit planem Boden (Durchmesser 120 mm, Höhe 20 mm) gegeben und durch Auswiegen die durch einen stetigen Luftstrom hervorgerufene Verdunstung in Abhängigkeit von der Zeit bei verschiedenen Temperaturen bestimmt. Die Ergebnisse sind in den Tabellen 3 - 7 angegeben.

Tabelle 3

| Spritzbrühe EC-Typ A | Verdunstungsverlust in Gew.-% bei 20 °C | | | | |
|---|---|---|---|---|---|
| | 0,5h | 1h | 2h | 3h | 4h |
| Blindwert | 10 | 17 | 31 | 45 | 57 |
| Beispiel 1 | 0,4 | 0,4 | 0,4 | 0,4 | 0,5 |
| Beispiel 8 | 0,8 | 1,5 | 2,9 | 5,0 | 6,0 |
| Beispiel 9 | 0,6 | 0,6 | 0,6 | 0,7 | 0,8 |

Tabelle 4

| Testbrühe EC-Typ A | Verdunstungsverlust in Gew.-% bei 25 °C | | | | | |
|---|---|---|---|---|---|---|
| | 1/2h | 1h | 2h | 3h | 4h | 24h |
| Blindwert | 9,5 | 15,9 | 27,0 | 37,5 | 48,3 | 97,9 |
| Beispiel 1 | 0,4 | 0,4 | 0,4 | 0,4 | 0,5 | 0,9 |
| Beispiel 2 | 6,8 | 10,8 | 16,1 | 17,3 | 17,7 | 19,1 |
| Beispiel 3 | 0,1 | 0,1 | 0,1 | 0,2 | 0,3 | 1,2 |
| Beispiel 14 | 0,5 | 0,5 | 0,5 | 0,8 | 1,0 | 2,7 |
| Beispiel 15 | 0,7 | 0,8 | 1,0 | 1,1 | 1,3 | 3,1 |
| Beispiel 16 | 0,6 | 0,9 | 1,4 | 1,5 | 1,9 | 3,9 |

Tabelle 5

| Testbrühe EC-Typ A | Verdunstungsverlust in Gew.-% bei 50 °C | | | | | |
|---|---|---|---|---|---|---|
| | 1/2h | 1h | 1,5h | 2h | 2,5h | 3h |
| Blindwert | 37 | 71 | 92 | — | — | — |
| Beispiel 1 | 20 | 36 | 48 | 53 | 58 | 62 |
| Beispiel 8 | 9 | 16 | 20 | 24 | 27 | 29 |
| Beispiel 9 | 14 | 24 | 31 | 37 | 40 | 42 |
| Beispiel 13 | 17 | 19 | 21 | 23 | 24 | 25 |
| Beispiel 14 | 5 | 7 | 10 | 13 | 15 | 17 |
| Beispiel 15 | 6 | 9 | 12 | 15 | 21 | 26 |
| Beispiel 16 | 11 | 16 | 20 | 24 | 27 | 30 |
| Beispiel 17 | 9 | 17 | 22 | 25 | 29 | 35 |

Tabelle 6

| Testbrühe EC-Typ B | Verdunstungsverlust in Gew.-% bei 25 °C | | | | |
|---|---|---|---|---|---|
| | 1/2h | 1h | 2h | 3h | 4h |
| Blindwert | 9,9 | 15,9 | 29,9 | 42,6 | 64,9 |
| Beispiel 5 | 0,1 | 0,1 | 0,1 | 0,1 | 0,2 |
| Beispiel 6 | 0,2 | 0,3 | 0,5 | 0,8 | 1,0 |
| Beispiel 7 | 0,3 | 0,8 | 1,3 | 1,6 | 1,9 |

Tabelle 7

| Testbrühe WP-Typ | Verdunstungsverlust in Gew.-% bei 25 °C | | | | | |
|---|---|---|---|---|---|---|
| | 1/2h | 1h | 2h | 3h | 4h | 5h |
| Blindwert | 5,9 | 10,6 | 20,2 | 31,2 | 41,8 | 95,0 |
| Beispiel 1 | 3,8 | 5,5 | 8,6 | 11,7 | 15,3 | 59,5 |
| Beispiel 2 | 1,1 | 2,2 | 4,3 | 6,6 | 9,2 | 44,2 |
| Beispiel 3 | 6,7 | 7,6 | 8,6 | 9,5 | 10,4 | 21,9 |
| Beispiel 5 | 0,2 | 0,3 | 0,4 | 0,5 | 0,6 | — |
| Beispiel 6 | 0,7 | 0,9 | 1,5 | 1,8 | 2,0 | — |
| Beispiel 7 | 0,6 | 0,8 | 0,8 | 0,9 | 0,9 | — |

VI. Prüfung des Schaumverhaltens

Zur Prüfung des Schaumverhaltens wurden die Spritzbrühen nach dem Lochscheiben-Schlagverfahren (DIN 53902) geprüft und beurteilt. Die Ergebnisse finden sich in Tabelle 8.

Tabelle 8

| (Arbeitsbedingungen: Füllmenge 200ml, Schlagzahl 30, Temperatur 25 °C) | | | | | | |
|---|---|---|---|---|---|---|
| Spritzbrühe EC-Typ A | Schaumvolumen in ml | | | | | |
| Zeit (Minuten) | 0,5 | 2 | 10 | 30 | 120 | 180 |
| Blindwert | 100 | 80 | 40 | 30 | 10 | – |
| Beispiel 1 | 0 | – | – | – | – | – |
| Beispiel 2 | 5 | 0 | – | – | – | – |
| Beispiel 4 | 0 | – | – | – | – | – |
| Spritzbrühe WP-Typ | | | | | | |
| Blindwert | 580 | 570 | 550 | 540 | 540 | 540 |
| Beispiel 1 | 70 | 50 | 50 | 40 | 30 | 30 |
| Beispiel 2 | 0 | – | – | – | – | – |
| Beispiel 3 | 10 | 10 | 10 | 10 | 5 | 5 |

VII.Vergleichende Prüfung von VH an Handelsprodukten

a) Nach den gleichen Testmethoden wie in Abschnitt V wurden Vergleichsversuche mit Spritzbrühen aus handelsüblichen Wirkstoffkonzentraten durchgeführt.

Als EC-Typ wurde das Insektizidkonzentrat Hostaquick[R] der Firma Hoechst AG verwendet, das als Wirkstoff 6-Chlorbicyclo(3,2,0) hepta-2,6-dien-6-yl-dimethylphosphat enthält. Als WP-Typ diente das Fungizid-Spritzpulver Derosal [R] der Firma Hoechst AG mit 2-(Methoxycarbonylamino)benzimidazol als Wirkstoff.

Tabelle 9 zeigt die Ergebnisse der Verdunstungsversuche bei 25°C.

Tabelle 9

| Spritzbrühe aus Hostaquick[R] (EC 50) | Verdunstungsverlust in Gew.-% | | | | | |
|---|---|---|---|---|---|---|
| | 1/2h | 1h | 2h | 3h | 4h | 24h |
| Blindwert | 6,3 | 10,3 | 20,3 | 33,7 | 41,7 | – |
| Beispiel 1 | 0,6 | 0,8 | 0,9 | 1,1 | 1,2 | 5,1 |
| Derosal[R] (WP 60) | | | | | | |
| Blindwert | 8,1 | 19,5 | 29,0 | 45,8 | 67,6 | 95,0 |
| Beispiel 6 | 0,1 | 0,1 | 0,1 | 0,1 | 0,2 | 0,7 |

b) Weitere Versuche wurden mit der Thermowaage in folgender Weise durchgeführt:

Aus drei handelsüblichen Pflanzenschutzmittel-Konzentraten wurden 10 %ige Testbrühen hergestellt, denen 0 %, 5 % und 10 % Zusatzmittel (VH) von Beispiel 15 zugesetzt wurden.

Je 50 µl dieser Spritzflüssigkeiten wurden zur Messung des Verdunstungsverlaufes in ein zylindrisches Aluminiumschälchen (Durchmesser 6,5 mm, Höhe 1,5 mm) eingefüllt. Die durch einen stetigen Luftstrom (40 l/h) bei 50°C hervorgerufene Verdunstung in Abhängigkeit von der Zeit wurde mittels einer Thermowaage, Modell TGA 951 der firma Du Pont, gemessen. Dabei wurde das Gewicht der Probe kontinuierlich von einem Schreiber aufgezeichnet. Die Ergebnisse sind in der nachfolgenden Tabelle 10 aufgeführt:

Tabelle 10

| Wirkstoff-Konzentrat | Zusatzmittel Gew.-% | Gewicht der Probe in mg nach | | | | | |
|---|---|---|---|---|---|---|---|
| | | 0 Min | 30 Min | 60 Min | 90 Min | 120 Min | 150 Min |
| (R)Hostathion | 0 % | 50 | 8 | 3 | 3 | 3 | 3 |
| | 5 % | 50 | 41 | 35 | 30 | 25 | 20 |
| | 10 % | 50 | 43 | 41 | 40 | 39 | 38 |
| (R)Afugan | 0 % | 50 | 9 | 2 | 2 | 2 | 2 |
| | 5 % | 50 | 41 | 35 | 30 | 26 | 23 |
| | 10 % | 50 | 42 | 40 | 38 | 37 | 36 |
| (R)Illoxan | 0 % | 50 | 9 | 3 | 3 | 3 | 3 |
| | 5 % | 50 | 40 | 36 | 31 | 26 | 21 |
| | 10 % | 50 | 41 | 36 | 32 | 29 | 26 |
| Wasser | 0 % | 50 | 10 | 0 | 0 | 0 | 0 |

(R)Hostathion (HOECHST AG) enthält das Insektizid 1-Phenyl-3-(0,0-diethylthiono-phosphoryl)-1,2,4-triazol, Emulgatoren und Xylol.
(R)Afugan (HOECHST AG) enthält das Fungizid 2-(0,0-Diethylthionophosphoryl)-5-methyl-6-carbethoxy-pyrazolo-(1,5-a)-pyrimidin, Emulgatoren und Xylol.
(R)Illoxan (HOECHST AG) enthält das Herbizid 2-(4-(2′, 4′-Dichlorphenoxy)-phenoxy)-propionsäuremethylester, Emulgatoren, Xylol und Cyclohexanon.

c) In gleicher Weise wie in b) wurden Versuche mit Hilfe der Thermowaage bei 50°C an den in Tabelle 11 aufgeführten Spritzbrühen unterschiedlicher Konzentration durchgeführt, denen ein VH gemäß Beispiel 1 zugesetzt worden war. Die Bewertung erfolgte über die mittlere Verdunstungsgeschwindigkeit.

Zur Berechnung dieser Größe wurden aus den Diagrammen die Zeiten entnommen, die erforderlich waren, um die Hälfte der jeweiligen Probemenge zu verdunsten. Die verdunstete Menge geteilt durch die Zeit, berechnet auf einen Quadratzentimeter Verdunstungsoberfläche ist als mittlere Verdunstungsgeschwindigkeit in Tabelle 11 aufgeführt. Zur Vereinfachung wurde die Krümmung der Verdunstungsoberfläche bei ihrer Berechnung nicht berücksichtigt.

Die Größe des verdunstungshemmenden Effektes ist sehr von der Art und Konzentration der Tenside abhängig, die in der Spritzbrühe enthalten sind. Da die verschiedenen Pflanzenschutzmittel wechselnde Mengen verschiedener Tenside in die Spritzbrühe mit einbringen, erklärt sich der unterschiedlich starke verdunstungshemmende Effekt in den einzelnen Versuchen.

Tabelle 11

| Handelsprodukt | Konzentrationen | | Verdunstungsgeschwindigkeit mg/min pro cm$^2$ |
|---|---|---|---|
| | Produkt % | Zusatzmittel % | |
| Wasser | 100 | 0 | 4,2 |
| | 90 | 10 | 0,8 |
| Endosulfan 35 EC (Insektizid) | 10 | 0 | 4,5 |
| | 20 | 10 | 1,9 |
| | 10 | 10 | 0,8 |
| | 5 | 2,5 | 1,5 |
| Triazophos 40 EC (Insektizid) | 10 | 0 | 4,4 |
| | 10 | 10 | 0,3 |
| | 5 | 5 | 0,4 |
| | 2,5 | 2,5 | 1,3 |
| | 5 | 2,5 | 0,9 |
| Heptenophos 50 EC (Insektizid) | 10 | 0 | 3,6 |
| | 10 | 10 | 0,1 |
| Diclofopmethyl 36 EC (Herbizid) | 10 | 0 | 4,0 |
| | 10 | 2,5 | 0,3 |
| | 10 | 1 | 0,5 |
| Pyrazophos 30 EC (Fungizid) | 10 | 0 | 4,4 |
| | 10 | 10 | 0,8 |

VIII Freilandversuch

Die Auswirkung der im Labor festgestellten Reduzierung der Verdunstungsgeschwindigkeit auf praktische Verhältnisse wurden in einem Freilandversuch unter subtropischen Klimaverhältnissen untersucht. Bei mittleren Temperaturen von 38°C und niedriger Luftfeuchtigkeit wurden die Schädlinge Heliothis ssp. und Anthonomus grandis in Baumwollkulturen bekämpft.

Die Versuche wurden auf 2 gleichen Parzellen mit Baumwolle von je 3 Hektar durchgeführt, die entsprechend dem Schädlingsaufkommen mit den üblichen Pflanzenschutzmitteln vorbehandelt waren. Bei den nächsten 4 Applikationen wurde bei Parzelle 1 ein Zusatzmittel gemäß Beispiel 1 zur Spritzflüssigkeit zugegeben und Parzelle 2 ohne Zusatzmittel gespritzt.

Je Hektar wurden bei jeder der 4 Spritzungen folgende Mengen an Pflanzenhehandlungsmitteln ausgebracht:

Parzelle 1

0,5 l Decis [R](2,5 EC)[1]
2,0 l Thiodan [R](35 EC)[2]
27,0 l Wasser
0,5 l Zusatzmittel

Parzelle 2

0,5 l Decis [R](2,5 EC)
2,0 l Thiodan [R](35 EC)
27,5 l Wasser

1) EC-Konzentrat[R]Decis enthält das Insektizid (S) - Cyano-3-phenoxy-benzylester der (1R:3S)-3-(2,2-dibromvinyl)-2,2- dimethylcyclopropan-carbonsäure

2) EC-Konzentrat[R]Thiodan enthält das Insektizid 6,7,8,9,10,10- Hexachlor-1,5,5a,9a,-tetrahydro-6,9-methano-2,4,3-benzodioxathiepin- oxid als Wirkstoff.

Danach wurden beide Parzellen in gleicher Weise weiterbehandelt. Alle Applikationen wurden vom Flugzeug aus durchgeführt.

Am Ende der Spritzsaison wurde eine Ertragsermittlung durchgeführt. Parzelle 1 erreichte einen Mehrertrag von umgerechnet 200 kg Baumwolle je Hektar, das entspricht einer Ertragsersteigerung von 5 % gegenüber Parzelle 2.

## Patentansprüche

1. Verfahren zur Verminderung der Wasserverdunstung von Spritzbrühen von Agrarchemikalien bei der Ausbringung nach dem Low-Volume-Verfahren durch Zusatz von 1 bis 15 Gewichtsprozent, vorzugsweise 5 bis 10 Gewichtsprozent eines Mittels in Form einer wäßrigen Dispersion oder einer selbstemulgierenden Lösung in einem organischen Lösungsmittel zu den auf Anwendungskonzentration eingestellten Spritzbrühen, dadurch gekennzeichnet, daß das Mittel folgende Zusammensetzung aufweist:

15 bis 50 Gew.-% eines Wachses oder einer Wachsmischung,

4 bis 20 Gew.-% nichtionische und/oder anionische Emulgatoren,

19,5 bis 81 Gew.-% Wasser und/oder organische Lösungsmittel aus der Gruppe Kohlenwasserstoffe, Ester und Ketone, mit Siedepunkten zwischen 70 und 280°C,

0 bis 5,5 Gew.-% weitere Hilfsstoffe,

0 bis 5,0 Gew.-% Amine oder Alkali, wobei die Komponenten sich zu 100% addieren.

2. Verfahren nach Anspruch 1, dadurch gekennzeichnet, daß das Mittel folgende Zusammensetzung aufweist:

15 bis 40 Gew.% Paraffinwachse enthaltendes Wachsgemisch mit einem Tropfpunkt zwischen 35 und 80°C,

4 bis 20 Gew.-% nichtionische und/oder anionische Emulgatoren,

35 bis 81 Gew.-% Wasser und/oder organische Lösungsmittel aus der Gruppe Kohenwasserstoffe, Ester und Ketone, mit Siedepunkten zwischen 70 und 280°C,

0 bis 5,5 Gew.-% weitere Hilfsstoffe.

3. Verfahren nach Anspruch 2, dadurch gekennzeichnet, daß das Mittel in Form einer wäßrigen Dispersion vorliegt und folgende Zusammensetzung aufweist:

15 bis 40 Gew.-% Paraffinwachse oder eines Gemisches von Paraffinwachsen unterschiedlicher Tropfpunkte im Bereich von 35–70°C, oder eines Gemisches solcher Paraffinwachse mit mikrokristallinen Wachsen mit Tropfpunkten zwischen 50 und 90°C, wobei der Anteil der Paraffinwachse an der Wachsmischung wenigstens 50 Gew.-% beträgt,

4 bis 20 Gew.-% nichtionische Emulgatoren,

0 bis 10 Gew.-% anionische Emulgatoren, wobei der Anteil der nichtionischen Emulgatoren wenigstens 50 Gew.-% der Emulgatoren ausmacht,

35 bis 81 Gew.-% Wasser,

0 bis 10 Gew.-% Xylol oder Cyclohexanon oder Benzinfraktionen mit Siedepunkten zwischen 145 und 210°C oder Ester mit Siedepunkten zwischen 70 und 280°C,

0 bis 5 Gew.-% Hydrotrope,

0 bis 0,5 Gew.-% anorganische Salze.

4. Verfahren nach Anspruch 1, dadurch gekennzeichnet, daß das Mittel folgende Zusammensetzung aufweist:

15 bis 50 Gew.-% einer Wachsmischung, enthaltend eine Wachskomponente mit einer Säurezahl von 10 bis 95 mg KOH/g Wachs,

4 bis 20 Gew.-% nichtionische und/oder anionische Emulgatoren,

19,5 bis 81 Gew.-% Wasser und/oder organische Lösungsmittel aus der Gruppe Kohlenwasserstoffe, Ester und Ketone mit Siedepunkten zwischen 70 und 280°C,

0 bis 5,5 Gew.-% Hilfsstoffe,

0 bis 5,0 Gew.-% Amine oder Alkali.

5. Verfahren nach Anspruch 4, bei dem die Wachsmischung des Mittels eine der folgenden Zusammensetzungen A, B oder C hat:

Mischung (A)

60 bis 95 Gew.-% Paraffinwachs und/oder mikrokristallines Paraffinwachs mit einem Erstarrungspunkt von 40 bis 70°C,

5 bis 40 Gew.-% oxidiertes Polyethylenwachs mit einem Tropfpunkt von 95 bis 140°C und einer Säurezahl von 10 bis 95 mg KOH/g Wachs.

Mischung (B)

60 bis 95 Gew.-% Paraffinwachs und/oder mikrokristallines Paraffinwachs mit einem Erstarrungspunkt von 40 bis 70°C,

5 bis 40 Gew.-% Esterbindungen enthaltendes Wachs mit einem Tropfpunkt von 75 bis 100°C und einer Säurezahl von 10 bis 95 mg KOH/g Wachs.

Mischung (C)

20 bis 50 Gew.-% Paraffinwachs mit einem Erstarrungspunkt von 30 bis 50°C,

50 bis 80 Gew.-% oxidiertes Paraffinwachs mit einem Erstarrungspunkt von 60 bis 90°C und einer Säurezahl von 10 bis 95 mg KOH/g Wachs.

6. Mittel zur Durchführung des Verfahrens nach Anspruch 1 in Form einer Wachs enthaltenden wäßrigen Dispersion oder selbstemulgierenden Lösung in einem organischen Lösungsmittel mit folgender Zusammensetzung:

15 bis 50 Gew.-% eines Wachses oder einer Wachsmischung,

4 bis 20 Gew.-% nichtionische und anionische Emulgatoren, wobei der Anteil der nichtionischen Emulgatoren wenigstens 50 Gew.-% der Emulgatoren ausmacht, das Mittel 0,5 bis 10 Gew.-% anionischen Emulgatoren enthält und die anionischen Emulgatoren ausgewählt sind aus der Gruppe der Salze von Schwefelsäurehalbestern oder Phosphorsäurepartialestern der linearen Alkohole oder Alkylphenole mit jeweils 12 bis 18 C-Atomen oder der Polyglykolmonoalkylether mit 12 bis 18 C-Atomen in der Alkylgruppe sowie der 12 bis 20 C-Atome enthaltenden Olefinsulfonate, Estersulfonate und Alkansulfonate, der Alkylbenzolsulfonate mit 6 bis 16 C-Atomen in den Alkylgruppen, der Sulfonate der Polyglykolmonoalkylether und der Salze der Polyglykolmonoalkylethercarbonsäuren mit jeweils 12 bis 18 C-Atomen in der Alkylkette und deren Mischungen,

19,5 bis 81 Gew.-% Wasser und/oder organische Lösungsmittel aus der Gruppe Kohlenwasserstoffe, Ester und Ketone, mit Siedepunkten zwischen 70 und 280°C,

0 bis 5,5 Gew.-% weitere Hilfsstoffe,

0 bis 5,0 Gew.-% Amine oder Alkali,

wobei die Komponenten sich zu 100% addieren.

7. Mittel zur Durchführung des Verfahrens nach Anspruch 1 in Form einer Wachs enthaltenden wäßrigen Dispersion oder selbstemulgierenden Lösung in einem organischen Lösungsmittel mit folgender Zusammensetzung:

15 bis 50 Gew.-% eines Wachses oder einer Wachsmischung,

4 bis 20 Gew.-% nichtionische und/oder anionische Emulgatoren, wobei die nichtionischen Emulgatoren Gemische aus Ethylenoxidaddukten an $C_{12}$–$C_{18}$-Fettalkohole oder Alkylphenole sind, bestehend aus

10 bis 40 Gew.-% Addukten mit 1 bis 4 Mol Ethylenoxid

25 bis 70 Gew.-% Addukten mit 4 bis 10 Mol Ethylenoxid

5 bis 35 Gew.-% Addukten mit 10 bis 50 Mol Ethylenoxid,

19,5 bis 81 Gew.-% Wasser und/oder organische Lösungsmittel aus der Gruppe Kohlenwasserstoffe, Ester und Ketone, mit Siedepunkten zwischen 70 und 280°C,

0 bis 5,5 Gew.-% weitere Hilfsstoffe,

0 bis 5,0 Gew.-% Amine oder Alkali.

8. Mittel nach Anspruch 6 oder 7, in dem der Wachsanteil aus einer Wachsmischung besteht, die eine Wachskomponente mit einer Säurezahl von 10 bis 95 mg KOH/g Wachs enthält.

9. Mittel zur Durchführung des Verfahrens gemäß Anspruch 5 in Form einer Wachs enthaltenden wäßrigen Dispersion oder selbstemulgierenden Lösung in einem organischen Lösungsmittel mit folgender Zusammensetzung:

15 bis 50 Gew.-% einer Wachsmischung, enthaltend eine Wachskomponente mit einer Säurezahl von 10 bis 95 mg KOH/g Wachs,

4 bis 20 Gew.-% nichtionische und/oder anionische Emulgatoren,

19,5 bis 81 Gew.-% Wasser und/oder organische Lösungsmittel aus der Gruppe Kohlenwasserstoffe, Ester und Ketone mit Siedepunkten zwischen 70 und 280°C,

0 bis 5,5 Gew.-% Hilfsstoffe,

0 bis 5,0 Gew.-% Amine oder Alkali,

wobei die Wachsmischung eine der folgenden Zusammensetzungen A, B oder C hat:

Mischung (A)

60 bis 95 Gew.-% Paraffinwachs und/oder mikrokristallines Paraffinwachs mit einem Erstarrungspunkt von 40 bis 70°C,

5 bis 40 Gew.-% oxidiertes Polyethylenwachs mit einem Tropfpunkt von 95 bis 140°C und einer Säurezahl von 10 bis 95 mg KOH/g Wachs.

Mischung (B)

60 bis 95 Gew.-% Paraffinwachs und/oder mikrokristallines Paraffinwachs mit einem Erstarrungspunkt von 40 bis 70°C,

5 bis 40 Gew.-% Esterbindungen enthaltendes Wachs mit einem Tropfpunkt von 75 bis 100°C und einer Säurezahl von 10 bis 95 mg KOH/g Wachs.

Mischung (C)

20 bis 50 Gew.-% Paraffinwachs mit einem Erstarrungspunkt von 30 bis 50°C,

50 bis 80 Gew.-% oxidiertes Paraffinwachs mit einem Erstarrungspunkt von 60 bis 90°C und einer Säurezahl von 10 bis 95 mg KOH/g Wachs.

10. Mittel nach Anspruch 9 in Form einer wäßrigen Dispersion mit folgender Zusammensetzung:

15 bis 40 Gew.-% Wachsmischung (A), (B) oder (C),

4 bis 20 Gew.-% nichtionische Emulgatoren,

0 bis 10 Gew.-% anionische Emulgatoren, wobei der Anteil der nichtionischen Emulgatoren wenigstens 50 Gew.-% der Emulgatoren ausmacht,

29,5 bis 81 Gew.-% Wasser,

0 bis 10 Gew.-% Xylol oder Cyclohexanon oder Benzinfraktionen mit Siedepunkten zwischen 145 und 210°C oder Ester mit Siedepunkten zwischen 70 und 280°C,

0 bis 5 Gew.-% Hydrotrope,

0 bis 0,5 Gew.-% anorganische Salze,

0 bis 5,0 Gew.-% Amine oder Alkali.

11. Mittel nach einem der Ansprüche 7 bis 10, das 0,5 bis 10 Gew.-% anionische Emulgatoren enthält, wobei der Anteil der nichtionischen Emulgatoren wenigstens 50 Gew.-% der Emulgatoren ausmacht.

12. Mittel nach einem der Ansprüche 7 bis 11, das 4 bis 14 Gew.-% nichtionische Emulgatoren und 1 bis 7 Gew.-% anionische Emulgatoren enthält.

13. Mittel nach einem der Ansprüche 6, 8 bis 12, bei dem die nichtionischen Emulgatoren aus der Gruppe Sorbitanester der höheren Fettsäuren, langkettige Alkylglycoside und Alkylenoxidaddukte an höhere lineare ein- und mehrwertige Alkohole, Alkylphenole, langkettige Carbonsäuren, Carbonsäureamide und Hydroxyfettsäuren mit 10 bis 24 C-Atomen, Fettsäureglycerin- oder Sorbitanester oder langkettige Alkylglycoside und deren Mischungen ausgewählt sind.

14. Mittel nach einem der Ansprüche 6, 8 bis 13, bei dem die nichtionischen Emulgatoren aus der Gruppe der Addukte von 2 bis 50 Mol Ethylenoxid an langkettige primäre Alkohole oder Fettsäuren mit 12 bis 18 C-Atomen und deren Mischungen ausgewählt sind.

15. Mittel nach einem der Ansprüche 6, 8 bis 14 in Form einer wäßrigen Dispersion, in dem die nichtionischen Emulgatoren Gemische aus Ethylenoxidaddukten an $C_{12}$–$C_{18}$-Fettalkohole oder Alkylphenole sind, bestehend aus

10 bis 40 Gew.-% Addukten mit 1 bis 4 Mol Ethylenoxid

25 bis 70 Gew.-% Addukten mit 4 bis 10 Mol Ethylenoxid

5 bis 35 Gew.-% Addukten mit 10 bis 50 Mol Ethylenoxid.

16. Mittel nach einem der Ansprüche 7 bis 15, bei dem die anionischen Emulgatoren aus der Gruppe der Salze von Schwefelsäurehalbestern oder Phosphorsäurepartialestern der linearen Alkohole oder Alkylphenole mit jeweils 12 bis 18 C-Atomen oder der Polyglykolmonoalkylether mit 12 bis 18 C-Atomen in der Alkylgruppe sowie der 12 bis 20 C-Atome enthaltenden Olefinsulfonate, Estersulfonate und Alkansulfonate, der Alkylbenzolsulfonate mit 6 bis 16 C-Atomen in den Alkylgruppen, der Sulfonate der Polyglykolmonoalkylether und der Salze der Polyglykolmonoalkylethercarbonsäuren mit jeweils 12 bis 18 C-Atomen in der Alkylkette und deren Mischungen ausgewählt sind.

17. Mittel nach einem der Ansprüche 6 bis 16, bei dem die anionischen Emulgatoren aus der Gruppe der Alkylbenzolsulfonate mit 6 bis 16 C-Atomen in den Alkylgruppen, den Alkansulfonaten mit 12 bis 20 C-Atomen und deren Mischungen ausgewählt sind.

18. Verfahren zur Verminderung der Wasserverdunstung von Spritzbrühen von Agrarchemikalien bei der Ausbringung nach dem LV-Verfahren nach Anspruch 1, dadurch gekennzeichnet, daß man den auf Anwendungskonzentration eingestellten Spritzbrühen 1 bis 15, vorzugsweise 5 bis 10 Gewichtsprozent eines verdunstungshemmenden Mittels gemäß einem der Ansprüche 6 bis 8 oder 10 bis 17 zusetzt.

19. Verwendung eines verdunstungshemmenden Mittels gemäß einem der Ansprüche 6 bis 17 zur Verminderung der Wasserverdunstung von Agrarchemikalien enthaltenden Spritzbrühen, die im LV-Verfahren ausgebracht werden.

## Claims

1. A process for reducing the evaporation of water from spray mixtures of agricultural chemicals during application by the low-volume method by addition of 1 to 15% by weight and preferably 5 to 10% by weight of an evaporation inhibitor in the form of an aqueous dispersion or a self-emulsifying solution in an organic solvent to the spray mixtures adjusted to the in-use concentration, characterized in that the evaporation inhibitor has the following composition:
    15 to 50% by weight of a wax or a wax mixture,
    4 to 20% by weight non ionic and/or anionic emulsifiers,
    19.5 to 81% by weight water and/or organic solvents from the group of hydrocarbons, esters and ketones having boiling points in the range from 70 to 280°C,
    0 to 5.5% by weight other auxiliaries,
    0 to 5.0% by weight amines or alkali,
    the components adding up to 100%.

2. A process as claimed in claim 1, characterized in that the evaporation inhibitor has the following composition:
    15 to 40% by weight of a wax mixture containing paraffin waxes with a dropping point of 35 to 80°C,
    4 to 20% by weight non ionic and/or anionic emulsifiers,
    35 to 81% by weight water and/or organic solvents from the group of hydrocarbons, esters and ketones having boiling points in the range from 70 to 280°C,
    0 to 5.5% by weight other auxiliaries.

3. A process as claimed in claim 2, characterized in that the evaporation inhibitor is in the form of an aqueous dispersion and has the following composition:
    15 to 40% by weight of paraffin waxes or a mixture of paraffin waxes having different dropping points in the range from 35 to 70°C or of a mixture of such paraffin waxes with microcrystalline waxes having dropping points in the range from 50 to 90°C, the proportion of paraffin waxes in the wax mixture being at least 50% by weight,
    4 to 20% by weight nonionic emulsifiers,
    0 to 10% by weight anionic emulsifiers, the nonionic emulsifiers making up at least 50% by weight of the emulsifiers,
    35 to 81% by weight water,
    0 to 10% by weight xylene or cyclohexanone or petroleum fractions having boiling points in the range from 145 to 210°C or esters having boiling points in the range from 70 to 280°C,
    0 to 5% by weight hydrotropes,
    0 to 0,5% by weight inorganic salts.

4. A process as claimed in claim 1, characterized in that the evaporation inhibitor has the following composition:
    15 to 50% by weight of a wax mixture containing a wax component having an acid value of 10 to 95 mg KOH/g wax,
    4 to 20% by weight nonionic and/or anionic emulsifiers,
    19.5 to 81% by weight water and/or organic solvents from the group of hydrocarbons, esters and ketones having boiling points in the range from 70 to 280°C,
    0 to 5.5% by weight auxiliaries,
    0 to 5.0% by weight amines or alkali.

5. A process as claimed in claim 4 in which the wax mixture of the evaporation inhibitor has one of the following compositions A, B or C:

Mixture (A)

60 to 95% by weight paraffin wax and/or microcrystalline paraffin wax having a setting point of 40 to 70°C,

5 to 40% by weight oxidized polyethylene wax having a dropping point of 95 to 140°C and an acid value of 10 to 95 mg KOH/g wax.

Mixture (B)

60 to 95% by weight paraffin wax and/or microcrystalline paraffin wax having a setting point of 40 to 70°C,

5 to 40% by weight of a wax containing ester bonds and having a dropping point of 75 to 100°C and an acid value of 10 to 95 mg KOH/g wax.

Mixture (C)

20 to 50% by weight paraffin wax having a setting point of 30 to 50°C,

50 to 80% by weight oxidized paraffin wax having a setting point of 60 to 90°C and an acid value of 10 to 95 mg KOH/g wax.

6. An evaporation inhibitor for carrying out the process claimed in claim 1 in the form of a wax-containing aqueous dispersion or self-emulsifying solution in an organic solvent having the following composition:

15 to 50% by weight of a wax or wax mixture,

4 to 20% by weight nonionic and anionic emulsifiers, the nonionic emulsifiers making up at least 50% by weight of the emulsifiers, the evaporation inhibitor containing from 0.5 to 10% by weight anionic emulsifiers and the anionic emulsifiers being selected from the group consisting of salts of sulfuric acid semi-esters or phosphoric acid partial esters of linear alcohols or alkyl phenols containing 12 to 18 C atoms or of polyglycol monoalkyl ethers containing 12 to 18 carbon atoms in the alkyl group and $C_{12-20}$ olefin sulfonates, ester sulfonates and alkane sulfonates, alkyl benzene sulfonates containing 6 to 16 carbon atoms in the alkyl groups, sulfonates of polyglycol monoalkyl ethers and salts of polyglycol monoalkyl ether carboxylic acids containing 12 to 18 carbon atoms in the alkyl chain and mixtures thereof,

19.5 to 81% by weight water and/or organic solvents from the group of hydrocarbons, esters and ketones having boiling points in the range from 70 to 280°C,

0 to 5.5% by weight other auxiliaries,

0 to 5.0% by weight amines or alkali,

the components adding up to 100%.

7. An evaporation inhibitor for carrying out the process claimed in claim 1 in the form of a wax-containing aqueous dispersion or self-emulsifying solution in an organic solvent having the following composition:

15 to 50% by weight of a wax or wax mixture,

4 to 20% by weight nonionic and/or anionic emulsifiers, the nonionic emulsifiers being mixtures of ethylene oxide adducts with $C_{12-18}$ fatty alcohols or alkyl phenols consisting of

10 to 40% by weight adducts containing 1 to 4 mol ethylene oxide,

25 to 70% by weight adducts containing 4 to 10 mol ethylene oxide,

5 to 35% by weight adducts containing 10 to 50 mol ethylene oxide,

19.5 to 81% by weight water and/or organic solvents from the group of hydrocarbons, esters and ketones having boiling points in the range from 70 to 280°C,

0 to 5.5% by weight other auxiliaries,

0 to 5.0% by weight amines or alkali.

8. Evaporation inhibitors as claimed in claim 6 or 7, in which the wax consists of a wax mixture containing a wax component having an acid value of 10 to 95 mg KOH/g wax.

9. An evaporation inhibitor for carrying out the process claimed in claim 5 in the form of a wax-containing aqueous dispersion or self-emulsifying solution in an organic solvent having the following composition:

15 to 50% by weight wax mixture containing a wax component having an acid value of 10 to 95 mg KOH/g wax,

4 to 20% by weight nonionic and/or anionic emulsifiers,

19.5 to 81% by weight water and/or organic solvents from the group of hydrocarbons, esters and ketones having boiling points in the range from 70 to 280°C,

0 to 5.5% by weight auxiliaries,

0 to 5.0% by weight amines or alkali,

the wax mixture having one of the following compositions A, B or C:

Mixture (A)

60 to 95% by weight paraffin wax and/or microcrystalline paraffin wax having a setting point of 40 to 70°C,
5 to 40% by weight oxidized polyethylene wax having a dropping point of 95 to 140°C and an acid value of 10 to 95 mg KOH/g wax.

Mixture (B)

60 to 95% by weight paraffin wax and/or microcrystalline paraffin wax having a setting point of 40 to 70°C,
5 to 40% by weight of a wax containing ester bonds and having a dropping point of 75 to 100°C and an acid value of 10 to 95 mg KOH/g wax.

Mixture (C)

20 to 50% by weight paraffin wax having a setting point of 30 to 50°C,
50 to 80% by weight oxidized paraffin wax having a setting point of 60 to 90°C and an acid value of 10 to 95 mg KOH/g wax.

10. An evaporation inhibitor as claimed in claim 9 in the form of an aqueous dispersion having the following composition:
15 to 40% by weight wax mixture (A), (B) or (C),
4 to 20% by weight nonionic emulsifiers,
0 to 10% by weight anionic emulsifiers, the nonionic emulsifiers making up at least 50% by weight of the emulsifiers,
29.5 to 81% by weight water,
0 to 10% by weight xylene or cyclohexanone or petroleum fractions having boiling points in the range from 145 to 210°C or esters having boiling points in the range from 70 to 280°C,
0 to 5% by weight hydrotropes,
0 to 0.5% by weight inorganic salts,
0 to 5.0% by weight amines or alkali.

11. An evaporation inhibitor as claimed in any of claims 7 to 10 which contains from 0.5 to 10% by weight anionic emulsifiers, the nonionic emulsifiers making up at least 50% by weight of the emulsifiers.

12. An evaporation inhibitior as claimed in any of claims 7 to 11 which contains from 4 to 14% by weight nonionic emulsifiers and from 1 to 7% by weight anionic emulsifiers.

13. An evaporation inhibitor as claimed in any of claims 6, 8 to 12, in which the nonionic emulsifiers are selected from the group consisting of sorbitan esters of higher fatty acids, long-chain alkyl glycosides and alkylene oxide adducts with higher linear, monohydric and polyhydric alcohols, alkyl phenols, long-chain carboxylic acids, carboxylic acid amides and hydroxy fatty acids containing 10 to 24 carbon atoms, fatty acid glycerol or sorbitan esters or long-chain alkyl glycosides and mixtures thereof.

14. An evaporation inhibitor as claimed in any of claims 6, 8 to 13 in which the nonionic emulsifiers are selected from the group consisting of the adducts of 2 to 50 mol ethylene oxide with long-chain $C_{12-18}$ primary alcohols or $C_{12-18}$ fatty acids and mixtures thereof.

15. An evaporation inhibitor as claimed in any of claims 6, 8 to 14 in the form of an aqueous dispersion in which the nonionic emulsifiers are mixtures of ethylene oxide adducts with $C_{12-18}$ fatty alcohols or alkyl phenols consisting of
10 to 40% by weight adducts containing 1 to 4 mol ethylene oxide,
25 to 70% by weight adducts containing 4 to 10 mol ethylene oxide,
5 to 35% by weight adducts containing 10 to 50 mol ethylene oxide.

16. An evaporation inhibitor as claimed in any of claims 7 to 15 in which the anionic emulsifiers are selected from the group consisting of the salts of sulfuric acid semiesters or phosphoric acid partial esters of linear alcohols or alkyl phenols containing 12 to 18 carbon atoms or of polyglycol monoalkyl ethers containing 12 to 18 carbon atoms in the alkyl group and $C_{12-20}$ olefin sulfonates, ester sulfonates and alkane sulfonates, alkyl benzene sulfonates containing 6 to 16 carbon atoms in the alkyl groups, sulfonates of polyglycol monoalkyl ethers and salts of polyglycol monoalkyl ether carboxylic acids containing 12 to 18 carbon atoms in the alkyl chain and mixtures thereof.

17. An evaporation inhibitor as claimed in any of claims 6 to 16, in which the anionic emulsifiers are selected from the group consisting of alkyl benzene sulfonates containing 6 to 16 carbon atoms in the alkyl groups, alkane sulfonates containing 12 to 20 carbon atoms and mixtures thereof.

18. A process for reducing the evaporation of water from spray mixtures of agricultural chemicals during application by the low-volume method claimed in claim 1, characterized in that from 1 to 15% by weight and preferably from 5 to 10% by weight of the evaporation inhibitor claimed in any of claims 6 to 8 or 10 to 17 is added to the spray mixtures adjusted to the in-use concentration.

19. The use of the evaporation inhibitor claimed in any of claims 6 to 17 for reducing the evaporation of water from spray mixtures containing agricultural chemicals which are applied by the low-volume method.

## Revendications

1. Procédé pour réduire l'évaporation de l'eau de mélanges pulvérisables de produits chimiques agricoles lors de leur application par le procédé d'aspersion à faible volume, en ajoutant dans le mélange pulvérisable amené à la concentration d'application, une quantité de 1 à 15% en poids, de préférence 5 à 10% en poids, d'un produit se présentant sous forme de dispersion aqueuse ou de solution auto-émulsifiante dans un solvant organique, caractérisé en ce que le dit produit possède la composition suivante:

15 à 50% en poids d'une cire ou d'un mélange de cires,
4 à 20% en poids d'émulsifiants non-ioniques et/ou anioniques,
19,5 à 81% en poids d'eau et/ou de solvants organiques du groupe des hydrocarbures, esters et cétones, avec des points d'ébullition compris entre 70 et 280°C,
0 à 5,5% en poids d'autres adjuvants,
0 à 5,0% en poids d'amines ou d'alcalis,
la somme des composants formant un total de 100%.

2. Procédé selon la revendication 1, caractérisé en ce que le produit présente la composition suivante:

15 à 40% en poids de mélange de cires contenant des cires de paraffines, ayant un point de goutte compris entre 35 et 80°C,
4 à 20% en poids d'émulsifiants non-ioniques et/ou anioniques,
35 à 81% en poids d'eau et/ou de solvants organiques du groupe des hydrocarbures, esters et cétones, avec des points d'ébullition compris entre 70 et 280°C,
0 à 5,5% en poids d'autres adjuvants.

3. Procédé selon la revendication 2, caractérisé en ce que le produit se présente sous forme de dispersion aqueuse et possède la composition suivante:

15 à 40% en poids de cires de paraffines ou d'un mélange de cires de paraffines de différents points de goutte compris entre 35 et 70°C, ou d'un mélange de telles cires de paraffines avec des cires microcristallines avec des points de goutte compris entre 50 et 90°C, la part de cires de paraffines dans le mélange de cires étant au moins 50% en poids,
4 à 20% en poids d'émulsifiants non-ioniques,
0 à 10% en poids d'émulsifiants anioniques, la part d'émulsifiants non-ioniques étant au moins égale à 50% en poids des émulsifiants,
35 à 81% en poids d'eau,
0 à 10% en poids de xylène ou de cyclohexanone ou de fractions de benzine avec des points d'ébullition compris entre 145 et 210°C ou des esters avec des points d'ébullition compris entre 70 et 280°C,
0 à 5% en poids d'hydrotropes,
0 à 0,5% en poids de sels inorganiques.

4. Procédé selon la revendication 1, caractérisé en ce que le produit présente la composition suivante:

15 à 50% en poids d'un mélange de cires comportant un composant cire d'un indice d'acide de 10 à 95 mg de KOH par g de cire,
4 à 20% en poids d'émulsifiants non-ioniques et/ou anioniques,
19,5 à 81% en poids d'eau et/ou de solvants organiques du groupe des hydrocarbures, esters et cétones, avec des points d'ébullition compris entre 70 et 280°C,
0 à 5,5% en poids d'adjuvants,
0 à 5,0% en poids d'amines ou d'alcalis.

5. Procédé selon la revendication 4, dans lequel le mélange de cires du produit a l'une des compositions A, B ou C suivantes:

### Mélange (A)

60 à 95% en poids de cire de paraffine et/ou de cire de paraffine micro-cristalline avec un point de solidification de 40 à 70°C,
5 à 40% en poids de cire de polyéthylène oxydée d'un point de goutte de 95 à 140°C et un indice d'acide de 10 à 95 mg KOH/g de cire.

### Mélange (B)

60 à 95% en poids de cire de paraffine et/ou de cire de paraffine micro-cristalline avec un point de solidification de 40 à 70°C,
5 à 40% en poids de cire contenant des liaisons ester, d'un point de goutte de 75 à 100°C et un indice d'acide de 10 à 95 mg KOH/g de cire.

### Mélange (C)

20 à 50% en poids de cire de paraffine d'un point de solidification compris entre 30 et 50°C,
50 à 80% en poids de cire de paraffine oxydée d'un point de solidification de 60 à 90°C et un indice d'acide de 10 à 95 mg KOH/g de cire.

6. Produit pour l'application du procédé selon la revendication 1 sous la forme d'une dispersion aqueuse contenant de la cire ou d'une solution auto-émulsifiante dans un solvant organique, ayant la composition suivante:

15 à 50% en poids d'une cire ou d'un mélange de cires,

4 à 20% en poids d'émulsifiants non-ioniques et anioniques, la part d'émulsifiants non-ioniques étant au moins égale à 50% en poids des émulsifiants, le produit contenant 0,5 à 10% en poids d'émulsifiants anioniques, et ces émulsifiants anioniques étant choisis dans le groupe comportant les sels de semi-esters d'acide sulfurique ou les esters partiels d'acide phosphorique d'alkylphénols ou d'alcools à chaîne linéaire avec chaque fois 12 à 18 atomes de carbone ou les polyglycolmono-alkyléthers avec 12 à 18 atomes de carbone dans le groupe alkyle, ainsi que les oléfine-sulfonates, les ester-sulfonates et les alcane-sulfonates contenant 12 à 20 atomes de carbone, les alkylbenzène-sulfonates avec 6 à 16 atomes de carbone dans les groupes alkyle, les sulfonates des polyglycolmono-alkyléthers et les sels des acides polyglycolmono-alkyl-éthercarboxyliques avec chaque fois 12 à 18 atomes de carbone dans la chaîne alkyle, et leurs mélanges,

19,5 à 81% en poids d'eau et/ou de solvants organiques du groupe des hydrocarbures, esters et cétones, avec des points d'ébullition compris entre 70 et 280°C,

0 à 5,5% en poids d'autres adjuvants,

0 à 5,0% en poids d'amines ou d'alcalis,

la somme des composants formant un total de 100%.

7. Produit pour l'exécution du procédé selon la revendication 1, sous forme d'une dispersion aqueuse contenant une cire ou d'une solution auto-émulsifiante dans un solvant organique, ayant la composition suivante:

15 à 50% en poids d'une cire ou d'un mélange de cires,

4 à 20% en poids d'émulsifiants non-ioniques et/ou anioniques, les émulsifiants non-ioniques étant des mélanges de produits d'addition d'oxyde d'éthylène sur des alcools gras en $C_{12}$–$C_{18}$ ou des alkylphénols composés de: 10–40% en poids de produits d'addition avec 1 à 4 moles d'oxyde d'éthylène, 25–70% en poids de produits d'addition avec 4 à 10 moles d'oxyde d'éthylène, 5–35% en poids de produits d'addition avec 10 à 50 moles d'oxyde d'éthylène,

19,5 à 81% en poids d'eau et/ou de solvants organiques du groupe des hydrocarbures, esters et cétones, avec des points d'ébullition compris entre 70 et 280°C,

0 à 5,5% en poids d'autres adjuvants,

0 à 5,0% en poids d'amines ou d'alcalis.

8. Produit selon la revendication 6 ou 7, dans lequel la part de cire consiste en un mélange de cires qui contient un composant ayant un indice d'acide de 10 à 95 mg KOH/g de cire.

9. Produit pour l'exécution du procédé selon la revendication 5, sous forme d'une dispersion aqueuse contenant une cire ou d'une solution auto-émulsifiante dans un solvant organique, ayant la composition suivante:

15 à 50% en poids d'un mélange de cires comportant un composant cire d'un indice d'acide de 10 à 95 mg de KOH par g de cire,

4 à 20% en poids d'émulsifiants non-ioniques et/ou anioniques,

19,5 à 81% en poids d'eau et/ou de solvants organiques du groupe des hydrocarbures, esters et cétones, avec des points d'ébullition compris entre 70 et 280°C,

0 à 5,5% en poids d'adjuvants,

0 à 5,0% en poids d'amines ou d'alcalis,

le mélange de cire ayant l'une des compositions suivantes A, B ou C:

Mélange (A)

60 à 95% en poids de cire de paraffine et/ou de cire de paraffine micro-cristalline avec un point de solidification de 40 à 70°C,

5 à 40% en poids de cire de polyéthylène oxydée d'un point de goutte de 95 à 140°C et un indice d'acide de 10 à 95 mg KOH/g de cire.

Mélange (B)

60 à 95% en poids de cire de paraffine et/ou de cire de paraffine micro-cristalline avec un point de solidification de 40 à 70°C,

5 à 40% en poids de cire contenant des liaisons ester, d'un point de goutte de 75 à 100°C et un indice d'acide de 10 à 95 mg KOH/g de cire.

Mélange (C)

20 à 50% en poids de cire de paraffine d'un point de solidification compris entre 30 et 50°C,

50 à 80% en poids de cire de paraffine oxydée d'un point de solidification de 60 à 90°C et un indice d'acide de 10 à 95 mg KOH/g de cire.

10. Produit selon la revendication 9 sous forme d'une dispersion aqueuse ayant la composition suivante:

15 à 40% en poids d'un mélange de cires (A), (B) ou (C),

4 à 20% en poids d'émulsifiants non-ioniques,

0 à 10% en poids d'émulsifiants anioniques, la part d'émulsifiants non-ioniques étant au moins égale à 50% en poids des émulsifiants,

29,5 à 81% en poids d'eau,

0 à 10% en poids de xylène ou de cyclohexanone ou de fractions de benzine avec des points d'ébullition compris entre 145 et 210°C ou des esters avec des points d'ébullition compris entre 70 et 280°C,

0 à 5% en poids d'hydrotropes,

0 à 0,5% en poids de sels inorganiques,

0 à 5,0% en poids d'amines ou d'alcalis.

11. Produit selon l'une des revendications 7 à 10, contenant 0,5 à 10% en poids d'émulsifiants anioniques, la part d'émulsifiants non ioniques représentant au moins 50% en poids des émulsifiants.

12. Produit selon l'une des revendications 7 à 11, contenant 4 à 14% en poids d'émulsifiants non ioniques et 1 à 7% en poids d'émulsifiants anioniques.

13. Produit selon l'une des revendications 6, 8 à 12, dans lequel les émulsifiants non ioniques sont choisis dans le groupe des esters de sorbitanne des acides gras supérieurs, des alkyl-glycosides à longue chaîne et produits d'addition d'oxydes d'alkylène sur des alcools mono- ou polyfonctionnels supérieurs, des alkylphénols, des acides carboxyliques à longue chaîne, des amides d'acides carboxyliques et des hydroxy-acides gras avec 10 à 24 atomes de carbone, des esters d'acides gras et de glycérine ou de sorbitanne ou des alkyl-glycosides à longue chaîne, et de leurs mélanges.

14. Produit selon l'une des revendications 6, 8 à 13, dans lequel les émulsifiants non ioniques sont choisis dans le groupe des produits d'addition de 2 à 50 moles d'oxyde d'éthylène sur des alcools primaires à longue chaîne ou des acides gras avec 12 à 18 atomes de carbone et leurs mélanges.

15. Produit selon l'une des revendications 6, 8 à 14, sous forme d'une dispersion aqueuse dans laquelle les émulsifiants non ioniques sont des mélanges de produits d'addition d'oxyde d'éthylène sur des alcools gras de $C_{12}$–$C_{18}$ ou des alkylphénols, consistant en:

10 à 40% en poids de produits d'addition avec 1 à 4 moles d'oxyde d'éthylène

25 à 70% en poids de produits d'addition avec 4 à 10 moles d'éthylène

5 à 35% en poids de produits d'addition avec 10 à 50 moles d'oxyde d'éthylène.

16. Produit selon l'une des revendications 7 à 15, dans lequel les émulsifiants anioniques sont choisis dans le groupe comportant les sels de semi-esters d'acides sulfuriques ou les esters phosphoriques partiels d'alkylphénols ou d'alcools à chaîne linéaire avec chaque fois 12 à 18 atomes de carbone ou les polyglycolmono-alkyléthers avec 12 à 18 atomes de carbone dans le groupe alkyle, ainsi que les oléfine-sulfonates, les ester-sulfonates et les alcane-sulfonates comportant 12 à 20 atomes de carbone, les alkylbenzène-sulfonates avec 6 à 16 atomes de carbone dans les groupes alkyle, les sulfonates des poly-glycolmonoalkyléthers et les sels des acides polyglycolmono-alkyléthercarboxyliques avec chaque fois 12 à 18 atomes de carbone dans la chaîne alkyle, et leurs mélanges.

17. Produit selon l'une des revendications 6 à 16, dans lequel les émulsifiants anioniques sont choisis dans le groupe des alkylbenzène-sulfonates avec 6 à 16 atomes de carbone dans les groupes alkyle, des alcanes-sulfonates avec 12 à 20 atomes de carbone et leurs mélanges.

18. Procédé pour réduire l'évaporation d'eau de mélanges pulvérisables de produits chimiques agricoles lors de leur application par le procédé à faible volume selon la revendication 1, caractérisé en ce que l'on ajoute aux mélanges pulvérisables amenés à la concentration d'application, 1 à 15, de préférence 5 à 10% en poids de produit inhibiteur d'évaporation selon les revendications 6 à 8 ou 10 à 17.

19. Utilisation d'un produit inhibiteur d'évaporation selon l'une des revendications 6 à 17 pour réduire l'évaporation d'eau de mélanges pulvérisables contenant des produits chimiques agricoles appliqués par le procédé à faible volume (LV).